# EUROPEAN PATENT APPLICATION

(11) **EP 4 809 880 A1**
(43) Date of publication of application: **23.09.2026**
(21) Application number: 24921151.7
(22) Date of filing: 20.03.2024
(51) Int. Cl.: A47J 42/36, A47J 42/38, A47J 31/42, A47J 31/44

(54) **TAMPER AND TAMPER RESETTING METHOD**

(30) Priority: 30.01.2024 CN 202410133604
(71) Applicant: Zhuhai Xinrun Intelligent Appliance Co., Ltd., Zhuhai, Guangdong 519000 (CN)
(72) Inventor: CHEN, Xuejun, Zhuhai, Guangdong 519000 (CN); MA, Long, Zhuhai, Guangdong 519000 (CN); WANG, Zhi, Zhuhai, Guangdong 519000 (CN)
(74) Representative: Murgitroyd & Company
(86) International application number: PCT/CN2024/082713
(87) International publication number: WO 2025/161105

(57) **Abstract**

A tamper and a tamper resetting method, relating to the technical field of coffee machines. The tamper comprises a housing (1), a tamping assembly (2), and a resetting mechanism (3), wherein the resetting mechanism (3) comprises a pushing member (33), a resetting member (32), and a pressing member (31); a mounting chamber (18) and a tamper chamber (11) are formed in the housing (1); the tamping assembly (2) is at least partially arranged in the tamper chamber (11); a first end of the pressing member (31) is rotatably fitted with the housing (1), and a second end of the pressing member (31) is located above the tamping assembly (2); two ends of the resetting member (32) are respectively mounted on the pressing member (31) and the housing (1); the pushing member (33) is at least partially arranged in the mounting chamber (18) and located below the pressing member (31); the pushing member (33) has a first moving position and a second moving position; at the first moving position, the second end of the pressing member (31) abuts against the tamping assembly (2), and at the second moving position, the pressing member (31) is separated from the tamping assembly (2); the resetting member (32) is configured to apply an acting force to the pressing member (31), so that the pressing member (31) presses against the tamping assembly (2); the tamping assembly (2) is in a reset state after being pressed by the pressing member (31). The accuracy of the position of the tamping assembly (2) after resetting is improved.

## Description

The present application claims priority to Chinese patent application No. 2024101336047, entitled "TAMPER AND TAMPER RESETTING METHOD" filed on January 30, 2024, the content of which is hereby incorporated by reference in its entirety.

### TECHNICAL FIELD

The present application belongs to the technical field of coffee machines, and in particular to a tamper and a tamper resetting method.

### BACKGROUND

In the field of coffee tampers, automatic tamping assemblies driven by motors have been increasingly applied due to their simple operations.

In the related art, for example, Chinese patent application No. 202022543443.9 discloses a beverage or food brewing machine. The device has an automatic quantitative tamping assembly, and the tamping assembly rapidly rotates under the driving of a motor and presses coffee powder or coffee beans. The tamping assembly introduces the coffee powder into a powder cup container located below a tamping wheel, and acts on the coffee powder in the powder cup container by its gravity. As the amount of the coffee powder increases, the tamping assembly gradually moves upward under the push of the coffee powder until being limited by an upper limiting structure, thereby realizing the quantitative and tamping functions for the coffee powder. When a user takes the powder cup container away, the tamping assembly falls back to an initial position under the action of gravity.

However, during using this device, when the user takes out the powder cup container, the falling of the tamping assembly under its gravity may be affected by interference factors, such as friction forces between components, an adhesion force of an oil film, factors like the device being placed on an inclined surface, etc. Therefore, by utilizing its own gravity, the tamping assembly cannot be ensured to accurately reset, which greatly reduces the stability of the device during use.

### SUMMARY

An objective of the present application is to solve the issue that the tamping assembly of the existing tamper cannot accurately reset. The present application provides a tamper and a tamper resetting method.

Technical solutions for realizing the above objective include the following.

A tamper includes a housing, a tamping assembly, and a resetting mechanism, the resetting mechanism includes a pushing member, a resetting member, and a pressing member; the housing is provided with a mounting cavity and a tamping cavity therein, the tamping assembly is at least partially provided in the tamping cavity, a first end of the pressing member is rotatably fitted to the housing, a second end of the pressing member is located above the tamping assembly, and two ends of the resetting member are respectively mounted on the pressing member and the housing; the pushing member is at least partially provided in the mounting cavity and is located below the pressing member;
wherein the pushing member has a first moving position and a second moving position; at the first moving position, the second end of the pressing member abuts against the tamping assembly; and at the second moving position, the pushing member abuts against the pressing member, and the pressing member is separated from the tamping assembly.

In an embodiment, the tamper further includes a detachable powder cup container, the housing is provided with an opening configured to allow the powder cup container to enter and exit the tamping cavity, the powder cup container is provided with a locking block, the housing is provided with a locking groove therein, the tamping cavity, the locking groove, and the mounting cavity are sequentially in communication with each other, at least a portion of the powder cup container is rotatably engaged with the locking groove, the pushing member is at least partially located in the locking groove, and the locking block is configured to abut against the pushing member, such that the pushing member has the first moving position and the second moving position.

In an embodiment, the pushing member includes a moving rod and a moving block, the moving block is mounted to a first end of the moving rod, a second end of the moving rod is located below the pressing member, and the moving block has a first guiding inclined surface;
the powder cup container has a cup body, the cup body is engaged with an arcuate groove, a number of the locking blocks is at least two, the two locking blocks are distributed along a circumferential direction of the cup body, the locking block has a second guiding inclined surface, and the two second guiding inclined surfaces are inclined in a same direction; an end portion of the locking block is configured to be in sliding fit with the first guiding inclined surface, and an end portion of the moving block is configured to be in sliding fit with the second guiding inclined surface.

In an embodiment, the resetting mechanism includes a limiting member, the housing is provided with a supporting column, the pressing member is provided with a through hole configured to allow the supporting column to extend through, the pressing member is provided with an accommodating groove, and the accommodating groove is in communication with the through hole; the limiting member is mounted on the pressing member, the resetting member is sleeved on the supporting column and is located in the accommodating groove; a first end of the resetting member is mounted on the limiting member, and a second end of the resetting member is mounted on a bottom wall of the accommodating groove.

In an embodiment, the limiting member includes a sliding rod and a limiting block, the sliding rod and the limiting block are of an integrated structure, the supporting column has an mounting hole, and an outer wall of the sliding rod is in sliding fit with an inner wall of the mounting hole; an outer diameter of the limiting block is greater than an outer diameter of the supporting column, and the outer diameter of the supporting column is less than an inner diameter of the through hole.

In an embodiment, the pressing member includes a pressing plate, a shaft pin, and a pressing block, the pressing block is mounted to a first end of the pressing plate, the shaft pin is mounted to a second end of the pressing plate, and the pressing plate is rotatably connected to the housing through the shaft pin; the accommodating groove is provided on the pressing plate, and the accommodating groove is located between the pressing block and the shaft pin.

In an embodiment, the tamping assembly includes a tamping shaft, a tamping wheel, a first abutting portion, and a second abutting portion, the first abutting portion is mounted to a first end of the tamping shaft, the tamping wheel is mounted to a second end of the tamping shaft, the second abutting portion is mounted to a third end of the tamping shaft, and the second abutting portion is located between the first abutting portion and the tamping wheel; the tamping wheel is located in the tamping cavity, and the tamping shaft is in sliding fit with an inner wall of the housing;
the tamper further includes a first limiting portion and a second limiting portion, both the first limiting portion and the second limiting portion are mounted on the inner wall of the housing, the first abutting portion is configured to abut against the first limiting portion, and the second abutting portion is configured to abut against the second limiting portion.

In an embodiment, the tamper further includes a triggering member, a micro switch, and a driving mechanism, the triggering member is mounted on the pushing member and is located in the mounting cavity, the driving mechanism is mounted on the housing, the micro switch is mounted in the mounting cavity, and the micro switch is electrically connected to the driving mechanism;
when the pushing member is at the first moving position, the triggering member is separated from the micro switch; and when the pushing member is at the second moving position, the triggering member is in contact with the micro switch and activates the micro switch.

In an embodiment, the driving mechanism includes a driving member, an output shaft, and a transmission assembly, the driving member is mounted on the housing, the output shaft is mounted on an output end of the driving member, a first end of the transmission assembly is engaged with the output shaft, and a second end of the transmission assembly is engaged with the tamping shaft of the tamping assembly;
the transmission assembly includes a driving gear, a driven gear, a first transmission gear, a second transmission gear, and a transmission shaft; the driving gear is mounted on the output shaft, the first transmission gear is mounted to a first end of the transmission shaft, the second transmission gear is mounted to a second end of the transmission shaft, the rotating shaft is mounted on the housing and is rotatably fitted to the housing, and the driven gear is sleeved on the tamping shaft; wherein the driving gear is meshed with the first transmission gear, and the second transmission gear is meshed with the driven gear.

The present application further provides a tamper resetting method for a tamper, including following steps:
first step: moving a pushing member to a first moving position, a resetting member being in an initial state, a pressing member abutting against a tamping assembly through the resetting member, and the tamping assembly being in a reset state; and
second step: moving the pushing member from the first moving position to a second moving position, the pushing member being configured to abut against the pressing member and drive the pressing member to move away from the tamping assembly, the resetting member being stretched by the pressing member, the pressing member being separated from the tamping assembly, and the tamping assembly being in an operation.

The technical solutions provided by the present application have the following advantages and effects:
1. The tamping cavity is configured to accommodate coffee powder, and the tamping assembly grinds the coffee powder in the tamping cavity, thereby performing a tamping processing on the coffee powder. When the pushing member is at the first moving position, the pushing member is separated from the pressing member. Since two ends of the resetting member are respectively mounted on the pressing member and the housing, the resetting member applies a force to the pressing member, so that the pressing member presses the tamping assembly. After being pressed by the pressing member, the tamping assembly moves to a lowest position in the tamping cavity, so that a tamping wheel of the tamping assembly is in contact with and rubs against a bottom wall of a tamping groove, thereby grinding to obtain relatively fine coffee powder. Since the tamping assembly operates in the tamping cavity, the tamping assembly needs to have a space for moving upward before tamping. By moving the pushing member to the second moving position, the pushing member pushes the pressing member to move upward, so that the resetting member is in a stretched state, the pressing member is separated from the tamping assembly, a space is provided for the tamping assembly to move upward, and the tamping assembly performs normal tamping. After tamping is completed, the pushing member moves to the first moving position, and the resetting member, due to a reaction force generated after being stretched, drives the pressing member to act on the tamping assembly, thereby causing the tamping assembly to return to an initial position. By providing the resetting member, the pressing member causes the tamping assembly to reset through the force of the resetting member. Through such repeated operations, the accuracy of the position of the tamping assembly after resetting is improved, thereby solving the issue that the tamping assembly of the existing tamper cannot accurately reset.
2. The present application facilitates the resetting of the tamping assembly. The locking block is provided on the powder cup container, the housing has the locking groove 13 engaged with the locking block, and the tamping cavity, the locking groove, the arcuate groove, and the mounting cavity are sequentially in communication with each other, so that during the tamping assembly performs tamping, the powder cup container enters the housing from the opening and is located in the tamping cavity, the powder cup container is located below the tamping assembly, and the powder cup container accommodates coffee powder that has been tamped. During use, the powder cup container enters the tamping cavity, and simultaneously the locking block of the powder cup container enters the locking groove to press against or push the pushing member, so that the pushing member moves from the first moving position to the second moving position. When the pushing member moves, the pressing member is driven to move, and simultaneously the resetting member is stretched, thereby providing a space for the tamping assembly to move upward. At this time, the tamping assembly is separated from the pressing member, and the tamping assembly is not restricted by the pressing member. After the tamping is completed, the powder cup container is removed from the tamping cavity, and the locking block is removed from the locking groove accordingly. When the pushing member is not subjected to the force from the locking block, the resetting member applies a reverse force to the pressing member, the pressing member in turn drives the pushing member to move from the second moving position to the first moving position, which drives the tamping assembly to return to the initial position. Through the cooperation between the locking block and the locking groove, the powder cup container controls the pushing member to move from the first moving position to the second moving position during use, thereby improving convenience of the resetting of the tamping assembly.
3. By disposing a plurality of locking blocks on the circumferential direction of the cup body, and the locking block having the second guiding inclined surface, when mounting the cup body, the cup body is engaged with the arcuate groove and is snapped into the arcuate groove, and the cup body rotates in the arcuate groove, thereby causing the locking block to move into the locking groove. Since the pushing member has the first guiding inclined surface, when the locking block is in contact with the pushing member, the first guiding inclined surface and the second guiding inclined surface are in contact with each other. Both the first guiding inclined surface and the second guiding inclined surface are configured to guide the locking block and the moving block to be in sliding fit, thereby reducing the force of the locking block pushing the moving block, so that when the cup body rotates in the arcuate groove, it is easier to push the pushing member to move from the first moving position to the second moving position, which improves the efficiency of the resetting of the resetting mechanism, and also improves convenience of the tamping operation of the tamper.
4. The present application improves the stability of the resetting member on the housing. The housing includes a supporting column configured to support the resetting member, the pressing member extends through the supporting column through the through hole, so that the pressing member is at least partially sleeved on the supporting column. Then, the limiting member is mounted on the supporting column, and the limiting member is configured to mount the resetting mechanism on the housing and to limit the position of the resetting mechanism on the housing. The accommodating groove for accommodating the resetting member is provided on the pressing member, the resetting member is sleeved on the supporting column, and two ends of the resetting member respectively abut against the limiting member and the bottom wall of the accommodating groove. During use, when the pressing member is pushed by the pushing member to the second moving position, since the limiting member is mounted on the pressing member, the pressing member pulls the resetting member, so that the resetting member has a reverse force for resetting. When the pushing member moves to the first moving position, the reverse force of the resetting member drives the pressing member to push the tamping assembly to reset. Since the resetting member is sleeved on the supporting column, the resetting member moves along a length direction of the supporting column when being stretched, thereby improving the stability of the resetting member during movement.
5. The sliding rod is provided in the mounting hole of the supporting column, and the sliding rod is in sliding fit with the supporting column, so that the limiting member moves along a height direction of the supporting column, thereby further improving the stability of the movement of the limiting member. Furthermore, the outer diameter of the limiting block is greater than the outer diameter of the supporting column, so that a top portion of the supporting column abuts against the limiting block, which can determines the position of the limiting member on the housing. The outer diameter of the supporting column is less than the inner diameter of the through hole, and the pressing member is sleeved on the supporting column, thereby facilitating the assembly.
6. By providing the pressing block on the first end of the pressing plate, and providing the shaft pin at the second end of the pressing plate, the pressing plate is rotatably connected to the housing through the shaft pin. The accommodating groove is located between the pressing block and the shaft pin, and the resetting member is provided in the accommodating groove, so that the pressing plate forms a lever structure through the resetting member and the shaft pin, thereby reducing the force required for the pressing block to push the tamping assembly to reset through the resetting member.
7. The tamping shaft of the tamping assembly is configured to engaged with the driving mechanism, the tamping shaft is driven by the driving mechanism to rotate, and the tamping shaft drives the tamping wheel to rotate. The tamping wheel is configured to press against and grind the coffee powder. The tamping shaft is in sliding fit with the inner wall of the housing. The tamping wheel moves upward continuously during tamping, and is configured to grind the coffee powder in the powder cup container flat and allow the amount of the coffee powder in the powder cup container to continuously increase to meet the amount required for brewing coffee. Furthermore, through the cooperation between the first abutting portion and the first limiting portion, and the cooperation between the second abutting portion and the second limiting portion, the position of the tamping wheel in the tamping cavity is thereby limited.
8. By providing the micro switch in the mounting cavity, the micro switch is electrically connected to the driving mechanism, and the driving mechanism is configured to drive the tamping shaft of the tamping assembly to rotate. Since the triggering member is provided on the pushing member, when the pushing member moves, the triggering member is driven to move. When the pushing member is at the first moving position, the triggering member is separated from the micro switch, and the driving mechanism is in a stopped working state. When the pushing member is at the second moving position, the triggering member is also driven to move and is in contact with the micro switch, thereby activating the micro switch. After the micro switch is activated, the driving mechanism starts to operate and drives the tamping assembly to operate. With such configuration, when the powder cup container enters the tamping cavity, the locking block is engaged with the locking groove and drives the pushing member to move from the first moving position to the second moving position, so that the pushing member can drive the pressing member to move, which provides a space for the tamping assembly to move upward; and the pushing member can trigger the driving mechanism to operate during movement, realizing turning on the tamper for tamping. The tamper simultaneously realizes a dual function of power-on and resetting, and the operation is simple.
9. The driving member is configured to provide power for the driving mechanism and drives the transmission assembly through the output shaft. The transmission assembly has the driving gear, the first transmission gear, the second transmission gear, and the driven gear. By providing the driving gear, the first transmission gear, the second transmission gear, and the driven gear, a transmission ratio of the transmission assembly and an output direction of the power are changed, so as to meet the requirements of the tamper for tamping.
10. Through this tamper resetting method, the operation is simple. It only needs to drive the pushing member to move from the first moving position to the second moving position to realize normal tamping operation of the tamping assembly. After tamping is completed, through the reaction force of the resetting member, the tamping assembly is accurately reset, avoiding the interference phenomenon during the resetting of the tamping assembly, and improving the stability of the tamper.

### BRIEF DESCRIPTION OF THE DRAWINGS

The accompanying drawings illustrate specific embodiments of the technical solutions described in the present application and form a part of the specification together with the embodiments to explain the technical solutions, principles, and effects of the present application.

Unless otherwise specified or defined, in different drawings, the same reference numerals represent the same or similar technical features, and different reference numerals can be used to represent the same or similar technical features.
FIG. 1 is a schematic structural view of a tamper according to an embodiment of the present application.
FIG. 2 is a cross-sectional view of a tamping assembly of the tamper in a reset state according to an embodiment of the present application.
FIG. 3 is a first cross-sectional view of the tamping assembly of the tamper in operation according to an embodiment of the present application.
FIG. 4 is a second cross-sectional view of the tamping assembly of the tamper in operation according to an embodiment of the present application.
FIG. 5 is a schematic view of a positional relationship among the tamping assembly, a powder cup container, and a resetting mechanism according to an embodiment of the present application.
FIG. 6 is a schematic structural view of the resetting mechanism according to an embodiment of the present application.
FIG. 7 is a partial enlarged view of portion A in FIG. 3 according to an embodiment of the present application.
FIG. 8 is a schematic structural view illustrating a pushing member and a pressing member according to an embodiment of the present application.
FIG. 9 is a schematic view of the pushing member according to an embodiment of the present application.
FIG. 10 is a schematic structural view of the powder cup container according to an embodiment of the present application.
FIG. 11 is a schematic structural view of the tamping assembly according to an embodiment of the present application.
FIG. 12 is a schematic structural view of a driving mechanism according to an embodiment of the present application.

Explanation of reference numerals in drawings:
100. tamper; 1. housing; 11. tamping cavity; 12. delivery pipeline; 13. locking groove; 14. opening; 15. first limiting portion; 16. second limiting portion; 17. supporting column; 18. mounting cavity; 19. arcuate groove; ; 2. tamping assembly; 21. first abutting portion; 22. tamping wheel; 23. tamping shaft; 24. second abutting portion; 3. resetting mechanism; 31. pressing member; 311. accommodating groove; 312. pressing block; 313. shaft pin; 314. pressing plate; 32. resetting member; 33. pushing member; 331. moving rod; 332. triggering member; 333. moving block; 3331. first guiding inclined surface; 34. limiting member; 341. limiting block; 342. sliding rod; ; 4. micro switch; 5. powder cup container; 51. locking block; 511. second guiding inclined surface; 52. cup body; 53. handle; 54. tamping groove; 6. driving mechanism; 61. driving member; 62. output shaft; 7. transmission assembly; 71. driving gear; 72. first transmission gear; 73. transmission shaft; 74. second transmission gear; 75. driven gear.

### DETAILED DESCRIPTION

To facilitate understanding of the present application, specific embodiments of the present application will be described in more detail below with reference to the accompanying drawings.

Unless otherwise specified or defined, the terms "first", "second," etc., used herein are only for distinguishing purposes and do not represent a specific number or a specific order.

Unless otherwise specified or defined, the term "and/or" used herein includes any and all combinations of one or more of associated listed items.

It should be noted that an element, when being referred to as being "fixed" to another element, may be directly fixed to the other element or through an intermediate element. An element, when being referred to as being "connected" to another element, may be directly connected to the other element or through an intermediate element. An element, when being referred to as being "mounted" on another element, may be directly mounted on the other element or through an intermediate element. An element, when being referred to as being "provided" on another element, may be directly provided on the other element or through an intermediate element.

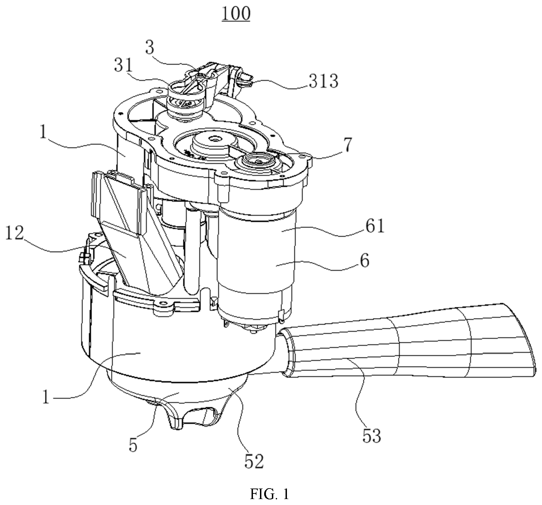

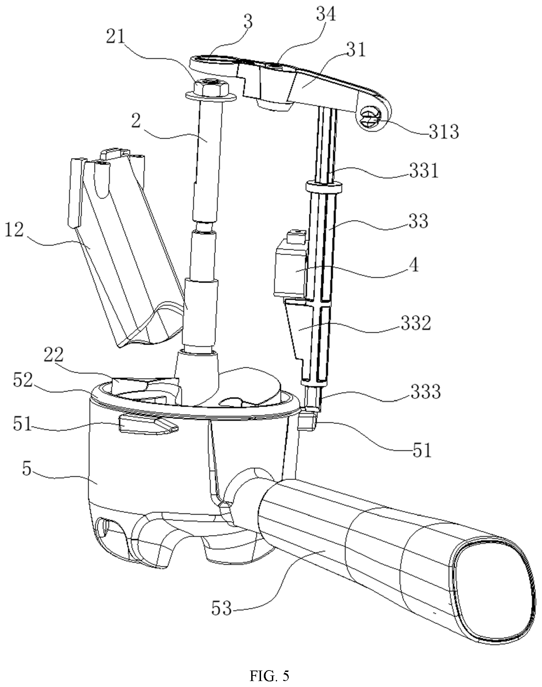

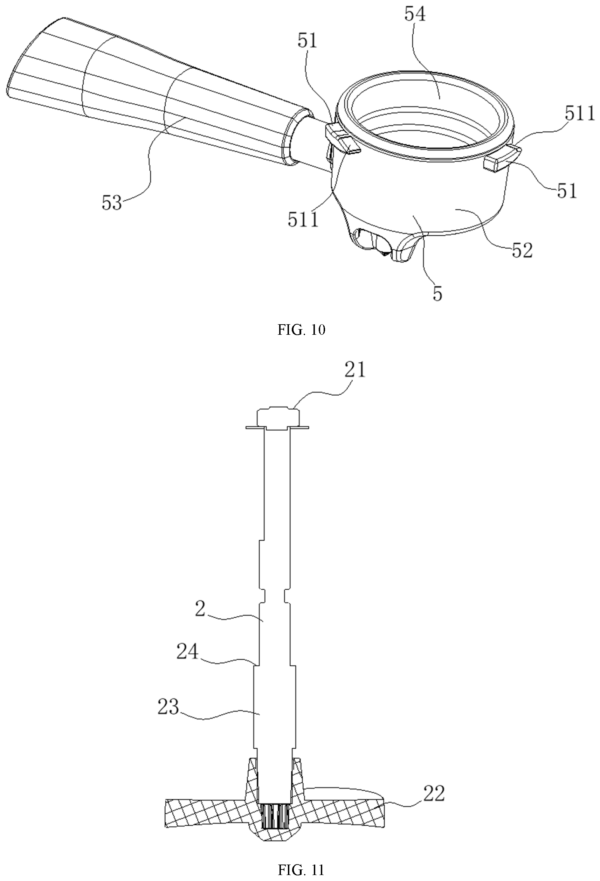

As shown in FIGS. 1 to 12, a tamper 100 includes a housing 1, a tamping assembly 2, and a resetting mechanism 3. The resetting mechanism 3 includes a pushing member 33, a resetting member 32, and a pressing member 31. A mounting cavity 18 and a tamping cavity 11 are formed in the housing 1. The tamping assembly 2 is at least partially provided in the tamping cavity 11. A first end of the pressing member 31 is rotatably engaged with the housing 1, a second end of the pressing member 31 is located above the tamping assembly 2, and two ends of the resetting member 32 are respectively mounted on the pressing member 31 and the housing 1. The pushing member 33 is at least partially provided in the mounting cavity 18 and is located below the pressing member 31. The pushing member 33 has a first moving position and a second moving position; at the first moving position, the second end of the pressing member 31 abuts against the tamping assembly 2; and at the second moving position, the pushing member 33 abuts against the pressing member 31, and the pressing member 31 is separated from the tamping assembly 2.

The tamping cavity 11 is configured to accommodate coffee powder, and the tamping assembly 2 grinds the coffee powder in the tamping cavity 11, thereby performing a tamping processing on the coffee powder. When the pushing member 33 is at the first moving position, the pushing member 33 is separated from the pressing member 31. Since two ends of the resetting member 32 are respectively mounted on the pressing member 31 and the housing 1, the resetting member 32 applies a force to the pressing member 31, so that the pressing member 31 presses the tamping assembly 2. After being pressed by the pressing member 31, the tamping assembly 2 moves to a lowest position in the tamping cavity 11, so that a tamping wheel 22 of the tamping assembly 2 is in contact with and rubs against a bottom wall of a tamping groove 54, thereby grinding to obtain relatively fine coffee powder. Since the tamping assembly 2 operates in the tamping cavity 11, the tamping assembly 2 needs to have a space for moving upward before tamping. By moving the pushing member 33 to the second moving position, the pushing member 33 pushes the pressing member 31 to move upward, so that the resetting member 32 is in a stretched state, the pressing member 31 is separated from the tamping assembly 2, a space is provided for the tamping assembly 2 to move upward, and the tamping assembly 2 performs normal tamping. After tamping is completed, the pushing member 33 moves to the first moving position, and the resetting member 32, due to a reaction force generated after being stretched, drives the pressing member 31 to act on the tamping assembly 2, thereby causing the tamping assembly 2 to return to an initial position. By providing the resetting member 32, the pressing member 31 causes the tamping assembly 2 to reset through the force of the resetting member 32. Through such repeated operations, the accuracy of the position of the tamping assembly 2 after resetting is improved, thereby solving the issue that the tamping assembly 2 of the existing tamper 100 cannot accurately reset.

In the present embodiment, the tamper 100 is mainly used for grinding coffee powder. Coffee powder crushed by a bean grinder enters the tamping cavity 11 through a delivery pipeline 12. An outlet of the delivery pipeline 12 is mounted on a side wall of the housing 1 and is located above the tamping wheel 22. Through grinding by the tamper 100, the coffee powder is made finer, improving a taste of brewed coffee. In the present embodiment, the resetting of the tamping assembly 2 is particularly important during the tamping process. Since the tamping wheel 22 needs to return to a reset state during the grinding by the tamping wheel 22, and the tamping wheel 22 in the reset state is attached to the bottom wall of the tamping groove 54, during rotation of the tamping wheel 22, the coffee powder is stirred or rapidly rotated in the tamping cavity 11, and the coffee powder enters between the tamping wheel 22 and the bottom wall of the tamping groove 54. The coffee powder is ground more finely by the tamping wheel 22, and furthermore is compacted by the tamping wheel 22, so that the coffee powder in the tamping groove 54 is uniformly distributed. Therefore, the resetting of the tamping assembly 2 affects whether the coffee powder can be ground more finely and the taste of the coffee powder after brewing.

In order to facilitate the resetting of the tamping assembly 2, as shown in FIGS. 1, 3, 4, and 10, the tamper 100 has a detachable powder cup container 5. The housing 1 has an opening 14 configured to allow the powder cup container 5 to enter and exit the tamping cavity 11. The powder cup container 5 has a locking block 51. The housing 1 is provided with a locking groove 13 and an arcuate groove 19 therein, and the arcuate groove 19 extends along a circumferential direction of the housing 1. The tamping cavity 11, the locking groove 13, the arcuate groove 19, and the mounting cavity 18 are sequentially in communication with each other. At least a portion of the powder cup container 5 is rotatably engaged with the arcuate groove 19, the pushing member 33 is at least partially located in the locking groove 13, and the locking block 51 is configured to abut against the pushing member 33, such that the pushing member 33 has the first moving position and the second moving position. The locking block 51 is provided on the powder cup container 5, the housing 1 has the locking groove 13 engaged with the locking block 51 therein, and the tamping cavity 11, the locking groove 13, the arcuate groove 19, and the mounting cavity 18 are sequentially in communication with each other, so that during the tamping assembly 2 performs tamping, the powder cup container 5 enters the housing 1 from the opening 14 and is located in the tamping cavity 11, the powder cup container 5 is located below the tamping assembly 2, and the powder cup container 5 accommodates coffee powder that has been tamped.

During use, the powder cup container 5 enters the tamping cavity 11. After the powder cup container 5 is rotated, the locking block 51 of the powder cup container 5 enters the locking groove 13 to press against or push the pushing member 33, so that the pushing member 33 moves from the first moving position to the second moving position. When the pushing member 33 moves, the pressing member 31 is driven to move, and simultaneously the resetting member 32 is stretched, thereby providing a space for the tamping assembly 2 to move upward. At this time, the tamping assembly 2 is separated from the pressing member 31, and the tamping assembly 2 is not restricted by the pressing member 31. After the tamping is completed, the powder cup container 5 is removed from the tamping cavity 11, and the locking block 51 is removed from the locking groove 13 accordingly. Without the force from the locking block 51, the pushing member 33 cannot abut against the pressing member 31. The resetting member 32 applies a reverse force to the pressing member 31, the pressing member 31 in turn drives the pushing member 33 to move from the second moving position to the first moving position, which drives the tamping assembly 2 to return to the initial position. Through the cooperation between the locking block 51 and the locking groove 13, the powder cup container 5 controls the pushing member 33 to move from the first moving position to the second moving position during use, and drives the pressing member 31 to move, thereby improving convenience of the resetting of the tamping assembly 2.

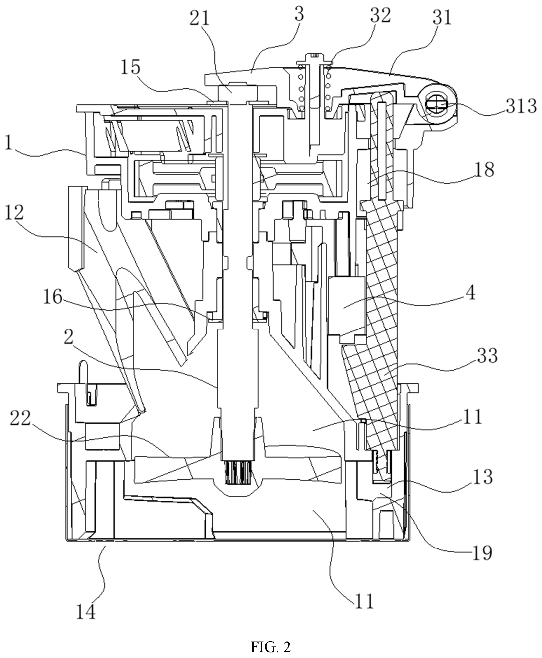

As shown in FIGS. 2 to 6, 8, and 9, the pushing member 33 includes a moving rod 331 and a moving block 333. The moving block 333 is mounted to a first end of the moving rod 331, a second end of the moving rod 331 is located below the pressing member 31, and the moving block 333 has a first guiding inclined surface 3331. The powder cup container 5 has a cup body 52, and the cup body 52 is engaged with the arcuate groove 19. The number of the locking blocks 51 is at least two, and the two locking blocks 51 are distributed along a circumferential direction of the cup body 52. The locking block 51 has a second guiding inclined surface 511, and the two second guiding inclined surfaces 511 are inclined in the same direction. An end portion of the locking block 51 is configured to be in sliding fit with the first guiding inclined surface 3331, and an end portion of the moving block 333 is configured to be in sliding fit with the second guiding inclined surface 511. A plurality of locking blocks 51 are provided on the circumferential direction of the cup body 52, and the locking block 51 has the second guiding inclined surface 511, so that when mounting the cup body 52, the cup body 52 is engaged with the arcuate groove 19 and is snapped into the arcuate groove 19, and the cup body 52 rotates in the arcuate groove 19, thereby causing the locking block 51 to move into the locking groove 13.

Since the pushing member 33 has the first guiding inclined surface 3331, when the locking block 51 is in contact with the moving block 333 of the pushing member 33, the first guiding inclined surface 3331 and the second guiding inclined surface 511 are in contact with each other. Both the first guiding inclined surface 3331 and the second guiding inclined surface 511 are configured to guide the locking block 51 and the moving block 333 to be in sliding fit, thereby reducing the force of the locking block 51 pushing the moving block 333, so that when the cup body 52 rotates in the arcuate groove 19, the pushing member 33 can be easily pushed to move from the first moving position to the second moving position, which improves the efficiency of the resetting of the resetting mechanism 3, and also improves convenience of the tamping of the tamper 100. In the present embodiment, the powder cup container 5 has a handle 53, the handle 53 is mounted on an outer wall of the cup body 52. During use, the handle 53 is gripped to move the cup body 52 into the tamping cavity 11.

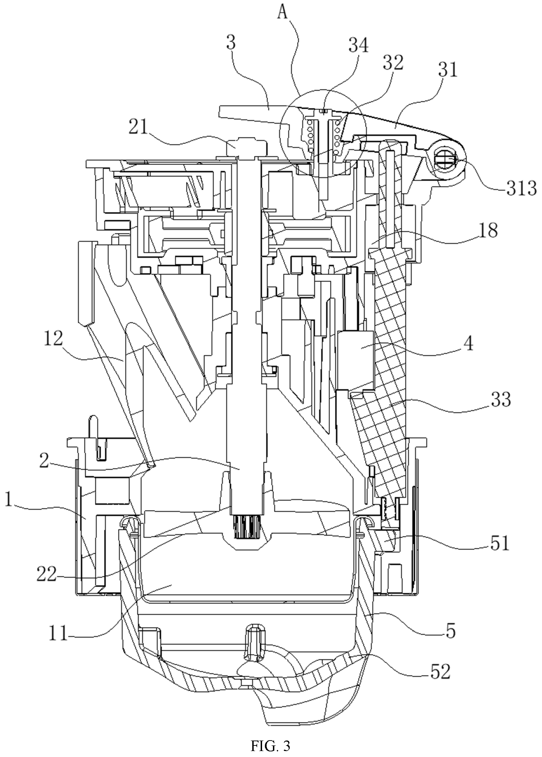

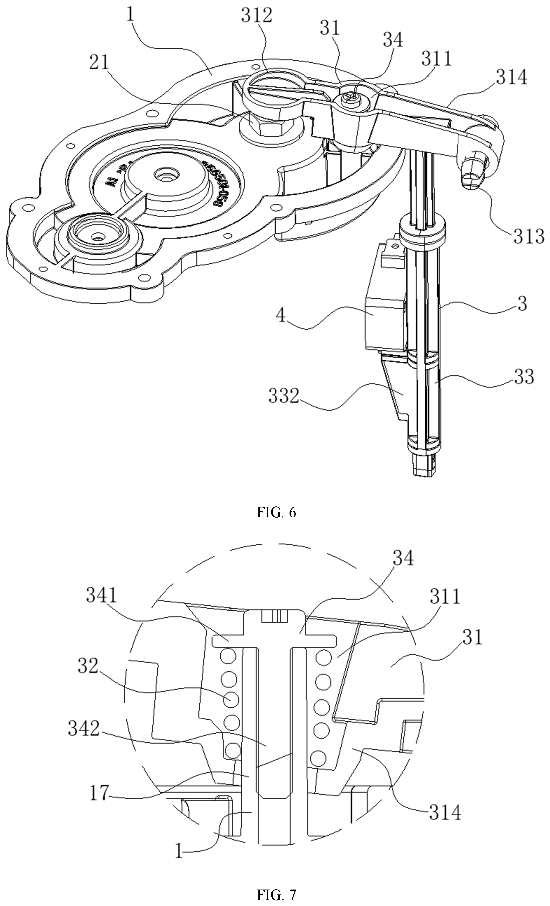

In order to improve the stability of the resetting member 32 on the housing 1, as shown in FIGS. 3 and 7, the resetting mechanism 3 includes a limiting member 34, the housing 1 is provided with a supporting column 17, and the pressing member 31 is provided with a through hole configured to allow the supporting column 17 to extend through. The pressing member 31 is provided with an accommodating groove 311, and the accommodating groove 311 is in communication with the through hole. The limiting member 34 is mounted on the pressing member 31, and the resetting member 32 is sleeved on the supporting column 17 and is located in the accommodating groove 311. A first end of the resetting member 32 is mounted on the limiting member 34, and a second end of the resetting member 32 is mounted on a bottom wall of the accommodating groove 311. The housing 1 is provided with the supporting column 17 for supporting the resetting member 32, and the pressing member 31 extends through the supporting column 17 through the through hole, so that the pressing member 31 is at least partially sleeved on the supporting column 17. Then, the limiting member 34 is mounted on the supporting column 17. The limiting member 34 is configured to mount the resetting mechanism 3 on the housing 1 and to limit the position of the resetting mechanism 3 on the housing 1. The accommodating groove 311 for accommodating the resetting member 32 is provided on the pressing member 31, and the resetting member 32 is sleeved on the supporting column 17. The resetting member 32 is a spring, and two ends of the resetting member 32 are respectively connected to the limiting member 34 and the bottom wall of the accommodating groove 311.

During use, when the pressing member 31 is pushed by the pushing member 33 to the second moving position, since the limiting member 34 is mounted on the pressing member 31, the pressing member 31 pulls the resetting member 32, so that the resetting member 32 has a reverse force for resetting. When the pushing member 33 moves to the first moving position, the reverse force of the resetting member 32 drives the pressing member 31 to push the tamping assembly 2 to reset. Since the resetting member 32 is sleeved on the supporting column 17, the resetting member 32 moves along a length direction of the supporting column 17 when being stretched, thereby improving the stability of the resetting member 32 during movement.

As shown in FIG. 7, the limiting member 34 includes a sliding rod 342 and a limiting block 341, and the sliding rod 342 and the limiting block 341 are of an integrated structure. The supporting column 17 has an mounting hole therein, and an outer wall of the sliding rod 342 is in sliding fit with an inner wall of the mounting hole. An outer diameter of the limiting block 341 is greater than an outer diameter of the supporting column 17, and the outer diameter of the supporting column 17 is less than an inner diameter of the through hole. The sliding rod 342 is provided in the mounting hole of the supporting column 17, and the sliding rod 342 is in sliding fit with the supporting column 17, so that the limiting member 34 moves along a height direction of the supporting column 17, thereby further improving the stability of the movement of the limiting member 34. Furthermore, the outer diameter of the limiting block 341 is greater than the outer diameter of the supporting column 17, so that a top portion of the supporting column 17 abuts against the limiting block 341, which can determines the position of the limiting member 34 on the housing 1. The outer diameter of the supporting column 17 is less than the inner diameter of the through hole, and the pressing member 31 is sleeved on the supporting column 17, thereby facilitating the assembly.

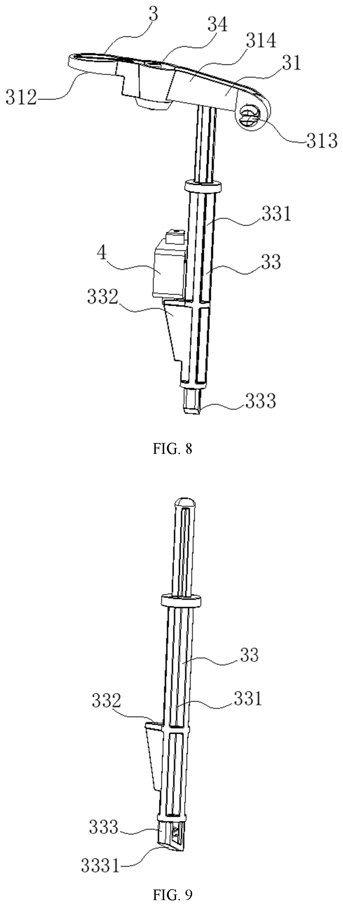

As shown in FIGS. 6 and 8, the pressing member 31 includes a pressing plate 314, a shaft pin 313, and a pressing block 312. The pressing block 312 is mounted to a first end of the pressing plate 314, the shaft pin 313 is mounted to a second end of the pressing plate 314, and the pressing plate 314 is rotatably connected to the housing 1 through the shaft pin 313. The accommodating groove 311 is provided on the pressing plate 314, and the accommodating groove 311 is located between the pressing block 312 and the shaft pin 313. The pressing block 312 is provided at the first end of the pressing plate 314, the shaft pin 313 is provided at the second end of the pressing plate 314, and the pressing plate 314 is rotatably connected to the housing 1 through the shaft pin 313, thereby limiting the movement range and position of the pressing plate 314. The accommodating groove 311 is located between the pressing block 312 and the shaft pin 313, and the resetting member 32 is provided in the accommodating groove 311, so that the pressing plate 314 forms a lever structure through the resetting member 32 and the shaft pin 313, thereby reducing the force required for the pressing block 312 to push the tamping assembly 2 to reset through the resetting member 32.

As shown in FIGS. 2, 3, and 11, the tamping assembly 2 includes a tamping shaft 23, a tamping wheel 22, a first abutting portion 21, and a second abutting portion 24. The first abutting portion 21 is mounted to a first end of the tamping shaft 23, the tamping wheel 22 is mounted to a second end of the tamping shaft 23, the second abutting portion 24 is mounted to a third end of the tamping shaft 23, and the second abutting portion 24 is located between the first abutting portion 21 and the tamping wheel 22. The tamping wheel 22 is located in the tamping cavity 11, and the tamping shaft 23 is in sliding fit with an inner wall of the housing 1. The tamper 100 further includes a first limiting portion 15 and a second limiting portion 16, and both the first limiting portion 15 and the second limiting portion 16 are mounted on the inner wall of the housing 1. The first abutting portion 21 is configured to abut against the first limiting portion 15, and the second abutting portion 24 is configured to abut against the second limiting portion 16. The tamping shaft 23 of the tamping assembly 2 is configured to be engaged with a driving mechanism 6, the tamping shaft 23 is driven by the driving mechanism 6 to rotate, and the tamping shaft 23 drives the tamping wheel 22 to rotate. The tamping wheel 22 is configured to press and grind the coffee powder. The tamping shaft 23 is in sliding fit with the inner wall of the housing 1. The tamping wheel 22 moves upward continuously during tamping to grind the coffee powder in the powder cup container 5 flat and to distribute the coffee powder evenly in the tamping groove 54, and also allow the coffee powder in the powder cup container 5 to continuously increase to meet an amount required for brewing coffee. Furthermore, through the cooperation between the first abutting portion 21 and the first limiting portion 15, and the cooperation between the second abutting portion 24 and the second limiting portion 16, the position of the tamping wheel 22 in the tamping cavity 11 is thereby limited.

As shown in FIGS. 2 to 5 and 8, the tamper 100 further includes a triggering member 332, a micro switch 4, and a driving mechanism 6. The triggering member 332 is mounted on the pushing member 33 and is located in the mounting cavity 18. The driving mechanism 6 is mounted on the housing 1. The micro switch 4 is mounted in the mounting cavity 18, and the micro switch 4 is electrically connected to the driving mechanism 6. When the pushing member 33 is at the first moving position, the triggering member 332 is separated from the micro switch 4; and when the pushing member 33 is at the second moving position, the triggering member 332 is in contact with the micro switch 4 and activates the micro switch 4. The micro switch 4 is provided in the mounting cavity 18, the micro switch 4 is electrically connected to the driving mechanism 6, the driving mechanism 6 is configured to drive the tamping shaft 23 of the tamping assembly 2 to rotate, and the triggering member 332 provided on the pushing member 33 is driven to move when the pushing member 33 moves. When the pushing member 33 is at the first moving position, the triggering member 332 is separated from the micro switch 4, and the driving mechanism 6 is in a stopped working state. When the pushing member 33 is at the second moving position, the triggering member 332 is driven to move and in contact with the micro switch 4, thereby activating the micro switch 4. After the micro switch 4 is activated, the driving mechanism 6 starts to operate and drives the tamping assembly 2 to operate.

With such configuration of the triggering member and the pushing member, when the powder cup container 5 enters the tamping cavity 11, the locking block 51 is engaged with the locking groove 13 and drive the pushing member 33 to move from the first moving position to the second moving position, so that the pushing member 33 can drive the pressing member 31 to move, which provides a space for the tamping assembly 2 to move upward; and the pushing member 33 can trigger the driving mechanism 6 to operate during movement, realizing turning on the tamper 100 for tamping. The tamper 100 simultaneously realizes a dual function of power-on and resetting, and the operation is simple.

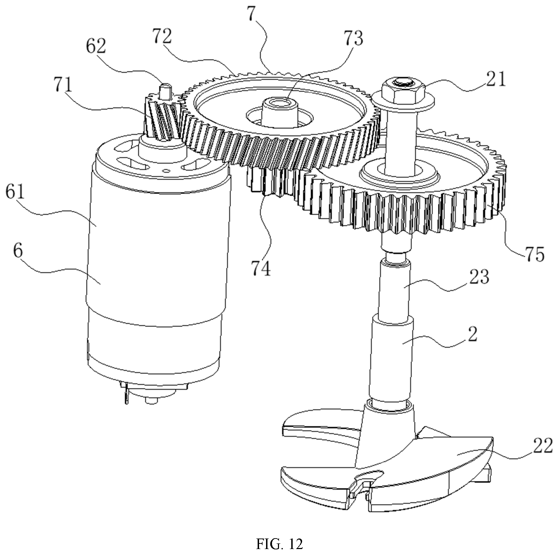

As shown in FIGS. 1 and 12, the driving mechanism 6 includes a driving member 61, an output shaft 62, and a transmission assembly 7. The driving member 61 is mounted on the housing 1, the output shaft 62 is mounted on an output end of the driving member 61, a first end of the transmission assembly 7 is engaged with the output shaft 62, and a second end of the transmission assembly 7 is engaged with the tamping shaft 23 of the tamping assembly 2. The transmission assembly 7 includes a driving gear 71, a driven gear 75, a first transmission gear 72, a second transmission gear 74, and a transmission shaft 73. The driving gear 71 is mounted on the output shaft 62, the first transmission gear 72 is mounted to a first end of the transmission shaft 73, the second transmission gear 74 is mounted to a second end of the transmission shaft 73, the rotating shaft 73 is mounted on the housing 1 and is rotatably fitted to the housing 1, and the driven gear 75 is sleeved on the tamping shaft 23. The driving gear 71 is meshed with the first transmission gear 72, and the second transmission gear 74 is meshed with the driven gear 75. The driving member 61 is configured to provide power for the driving mechanism 6 and drive the transmission assembly 7 through the output shaft 62. The transmission assembly 7 has the driving gear 71, the first transmission gear 72, the second transmission gear 74, and the driven gear 75, and transmits power through the transmission shaft 73 and the transmission gears. By providing the driving gear 71, the first transmission gear 72, the second transmission gear 74, and the driven gear 75, a transmission ratio of the transmission assembly 7 and an output direction of the power are changed, so as to meet the requirements of the tamper 100 for tamping.

The present application further provides a tamper resetting method for a tamper 100, including the following steps:
First step: moving the pushing member 33 to a first moving position, the resetting member 32 being in an initial state, the pressing member 31 abutting against the tamping assembly 2 through the resetting member 32, and the tamping assembly 2 being in a reset state; and
Second step: moving the pushing member 33 from the first moving position to a second moving position, the pushing member 33 being configured to abut against the pressing member 31 and drive the pressing member 31 to move away from the tamping assembly 2, the resetting member 32 being stretched by the pressing member 31, the pressing member 31 being separated from the tamping assembly 2, and the tamping assembly 2 being in an operation.

Through this resetting method, the operation is simple, it only needs to drive the pushing member 33 to move from the first moving position to the second moving position to realize normal tamping operation of the tamping assembly 2. After tamping is completed, through the reaction force of the resetting member 32, the tamping assembly 2 is accurately reset, avoiding the interference phenomenon during the resetting of the tamping assembly 2, and improving the stability of the tamper 100.

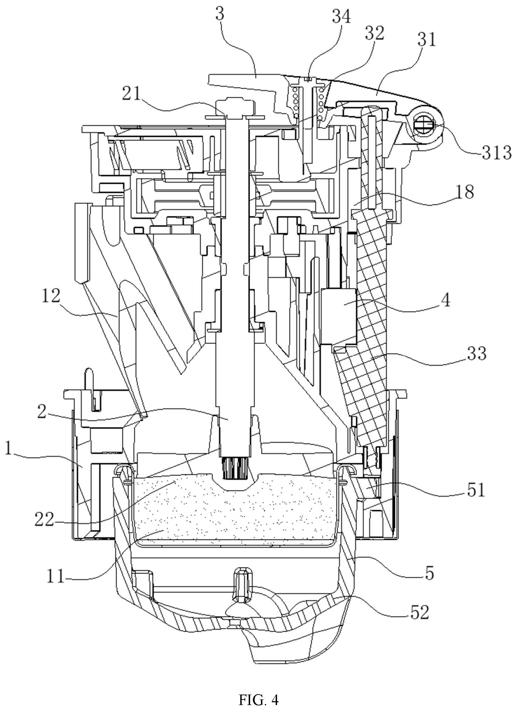

As shown in FIGS. 2 to 4, the working principle of the present tamper 100 is as follows: first, the powder cup container 5 is snapped into the housing 1, the locking block 51 of the powder cup container 5 is engaged with the arcuate groove 19, the tamping groove 54 of the powder cup container 5 is located in the tamping cavity 11, and the tamping wheel 22 is located at a lower part of the tamping groove 54. The locking block 51 of the powder cup container 5 is screwed into the locking groove 13, and pushes the pushing member 33 to move upward, thereby causing the pressing member 31 to move upward, and a space is provided for the tamping assembly 2 to move upward. Then, coffee powder is transported through the delivery pipeline 12 into the tamping cavity 11, and the micro switch 4 activates the driving mechanism 6. The driving mechanism 6 drives the tamping assembly 2 to rotate, and the tamping wheel 22 of the tamping assembly 2 grinds or stirs the coffee powder. As can be seen from FIG. 4, as the amount of coffee powder in the tamping groove 54 continuously increases, the tamping wheel 22 moves upward and pushes the tamping shaft 23 to move upward. When the amount of the coffee powder in the tamping groove 54 reaches a preset amount, the driving mechanism 6 stops operating. The powder cup container 5 is taken out from the tamper 100, and simultaneously the locking block 51 is separated from the locking groove 13. Absence of an external force, the pushing member 33 is pushed by the pressing member 31 to the first moving position, and the tamping assembly 2 is also pressed by the pressing member 31 to a reset state, so as to prepare for a next tamping operation.

When referring to the drawings for description, new features that appear are described; in order to avoid repeated reference to the drawings resulting in insufficiently concise description, features already described, under the condition that the expression is clear, will not be referenced to the drawings one by one.

The purpose of the above embodiments is to exemplarily reproduce and derive the technical solutions of the present application, and thereby completely describe the technical solutions, purposes, and effects of the present application, with the purpose of enabling the public to have a more thorough and comprehensive understanding of the disclosure of the present application, and not to limit the protection scope of the present application.

The above embodiments are also not exhaustive listings based on the present application, and in addition thereto, there may also exist a plurality of other unlisted embodiments. Any substitution and improvement made without violating the concept of the present application shall fall into the protection scope of the present application.

## Claims

1. A tamper, comprising a housing, a tamping assembly, and a resetting mechanism, wherein the resetting mechanism comprises a pushing member, a resetting member, and a pressing member; the housing is provided with a mounting cavity and a tamping cavity therein, the tamping assembly is at least partially provided in the tamping cavity, a first end of the pressing member is rotatably fitted to the housing, a second end of the pressing member is located above the tamping assembly, and two ends of the resetting member are respectively mounted on the pressing member and the housing; the pushing member is at least partially provided in the mounting cavity and is located below the pressing member;
wherein the pushing member has a first moving position and a second moving position; at the first moving position, the second end of the pressing member abuts against the tamping assembly; and at the second moving position, the pushing member abuts against the pressing member, and the pressing member is separated from the tamping assembly.

2. The tamper according to claim 1, further comprising a detachable powder cup container, the housing is provided with an opening configured to allow the powder cup container to enter and exit the tamping cavity, the powder cup container is provided with a locking block, the housing is provided with a locking groovetherein, the tamping cavity, the locking groove, and the mounting cavity are sequentially in communication with each other, at least a portion of the powder cup container is rotatably engaged with the locking groove, the pushing member is at least partially located in the locking groove, and the locking block is configured to abut against the pushing member, such that the pushing member has the first moving position and the second moving position.

3. The tamper according to claim 2, wherein the pushing member comprises a moving rod and a moving block, the moving block is mounted to a first end of the moving rod, a second end of the moving rod is located below the pressing member, and the moving block has a first guiding inclined surface;
the powder cup container has a cup body, the cup body is engaged with an arcuate groove, a number of the locking blocks is at least two, the two locking blocks are distributed along a circumferential direction of the cup body, the locking block has a second guiding inclined surface, and the two second guiding inclined surfaces are inclined in a same direction; an end portion of the locking block is configured to be in sliding fit with the first guiding inclined surface, and an end portion of the moving block is configured to be in sliding fit with the second guiding inclined surface.

4. The tamper according to claim 1, wherein the resetting mechanism comprises a limiting member, the housing is provided with a supporting column, the pressing member is provided with a through hole configured to allow the supporting column to extend through, the pressing member is provided with an accommodating groove, and the accommodating grooveis in communication with the through hole; the limiting member is mounted on the pressing member, the resetting member is sleeved on the supporting column and is located in the accommodating groove; a first end of the resetting member is mounted on the limiting member, and a second end of the resetting member is mounted on a bottom wall of the accommodating groove.

5. The tamper according to claim 4, wherein the limiting member comprises a sliding rod and a limiting block, the sliding rod and the limiting block are of an integrated structure, the supporting column has a mounting hole, and an outer wall of the sliding rod is in sliding fit with an inner wall of the mounting hole; an outer diameter of the limiting block is greater than an outer diameter of the supporting column, and the outer diameter of the supporting column is less than an inner diameter of the through hole.

6. The tamper according to claim 4, wherein the pressing member comprises a pressing plate, a shaft pin, and a pressing block, the pressing block is mounted to a first end of the pressing plate, the shaft pin is mounted to a second end of the pressing plate, and the pressing plate is rotatably connected to the housingthrough the shaft pin; the accommodating groove is provided on the pressing plate, and the accommodating grooveis located between the pressing block and the shaft pin.

7. The tamper according to any one of claims 1 to 6, wherein the tamping assembly comprises a tamping shaft, a tamping wheel, a first abutting portion, and a second abutting portion, the first abutting portion is mounted to a first end of the tamping shaft, the tamping wheel is mounted to a second end of the tamping shaft, the second abutting portion is mounted to a third end of the tamping shaft, and the second abutting portion is located between the first abutting portion and the tamping wheel; the tamping wheel is located in the tamping cavity, and the tamping shaft is in sliding fit with an inner wall of the housing;
the tamper further comprises a first limiting portion and a second limiting portion, both the first limiting portion and the second limiting portion are mounted on the inner wall of the housing, the first abutting portion is configured to abut against the first limiting portion, and the second abutting portion is configured to abut against the second limiting portion.

8. The tamper according to any one of claims 1 to 6, further comprising a triggering member, a micro switch, and a driving mechanism, the triggering member is mounted on the pushing member and is located in the mounting cavity, the driving mechanism is mounted on the housing, the micro switch is mounted in the mounting cavity, and the micro switch is electrically connected to the driving mechanism;
when the pushing member is at the first moving position, the triggering member is separated from the micro switch; and when the pushing member is at the second moving position, the triggering member is in contact with the micro switch and activates the micro switch.

9. The tamper according to claim 8, wherein the driving mechanism comprises a driving member, an output shaft, and a transmission assembly, the driving member is mounted on the housing, the output shaft is mounted on an output end of the driving member, a first end of the transmission assembly is engaged with the output shaft, and a second end of the transmission assembly is engaged with the tamping shaft of the tamping assembly;
the transmission assembly comprises a driving gear, a driven gear, a first transmission gear, a second transmission gear, and a transmission shaft; the driving gear is mounted on the output shaft, the first transmission gear is mounted to a first end of the transmission shaft, the second transmission gear is mounted to a second end of the transmission shaft, the transmission shaft is mounted on the housing and is rotatably fitted to the housing, and the driven gear is sleeved on the tamping shaft; wherein the driving gear is meshed with the first transmission gear, and the second transmission gear is meshed with the driven gear.

10. A tamper resetting method for a tamper, comprising following steps:
moving a pushing member to a first moving position, a resetting member being in an initial state, a pressing member abutting against a tamping assemblythrough the resetting member, and the tamping assembly being in a reset state; and
moving the pushing member from the first moving position to a second moving position, the pushing member being configured to abut against the pressing member and drive the pressing member to move away from the tamping assembly, the resetting member being stretched by the pressing member, the pressing member being separated from the tamping assembly, and the tamping assembly being in an operation.
